# FASCICULE DE BREVET EUROPEEN

(11) **EP 3 003 826 B1**
(45) Date de publication et mention de la délivrance du brevet: **03.05.2017**
(21) Numéro de dépôt: 14731689.7
(22) Date de dépôt: 20.05.2014
(51) Int. Cl.: B62D 21/00, B62D 21/11

(54) **BERCEAU POUR TRAIN ROULANT DE VÉHICULE AUTOMOBILE**
TRÄGER FÜR FAHRWERK EINES KRAFTFAHRZEUGS
CRADLE FOR MOTOR VEHICLE RUNNING GEAR

(30) Priorité: 31.05.2013 FR 1354970
(43) Date de publication de la demande: 13.04.2016
(73) Titulaire: Peugeot Citroën Automobiles SA, 78140 Vélizy Villacoublay (FR)
(72) Inventeur: RIGUEL, Frederic, F-92300 Levallois Perret (FR); PALPACUER, Eric, F-75013 Paris (FR); ROUET, Julien, F-31200 Toulouse (FR)
(74) Mandataire: Rosenberg, Muriel Sylvie
(86) Numéro de dépôt international: PCT/FR2014/051164
(87) Numéro de publication internationale: WO 2014/191655

(56) Documents cités:
- EP-A1- 1 504 983
- EP-A2- 1 270 374
- US-A- 5 593 001

## Description

L'invention a trait au domaine de structures portantes de véhicule, telles qu'un berceau destiné à supporter les liaisons au sol du véhicule. L'invention a trait plus précisément à la fixation d'accessoire(s) ou d'élément(s) périphérique(s) à une telle structure. L'invention a trait également à un procédé de fabrication d'une telle structure ainsi qu'à un véhiculé équipé de ladite structure. Les documents EP 1 270 374 A2 et EP 1504 983 A1 divulguent le préambule de la revendication une. Les véhicules automobiles à traction avant ont un train roulant avant comportant un berceau servant, d'une part, au montage du train avant sous le châssis du véhicule automobile et, d'autre part, à la fixation des roues avant et des éléments nécessaires pour varier l'orientation des roues avant. Les véhicules à traction arrière ont, en plus du train avant avec berceau, également un train arrière avec berceau pour monter le train arrière sous le châssis.

Lorsque le moteur de ce véhicule est situé à l'avant du véhicule, la ligne d'échappement s'étend à proximité du berceau en passant au-dessus ou en-dessous dudit berceau en fonction de la configuration du véhicule. La ligne d'échappement est habituellement fixée au berceau par une fixation souple.

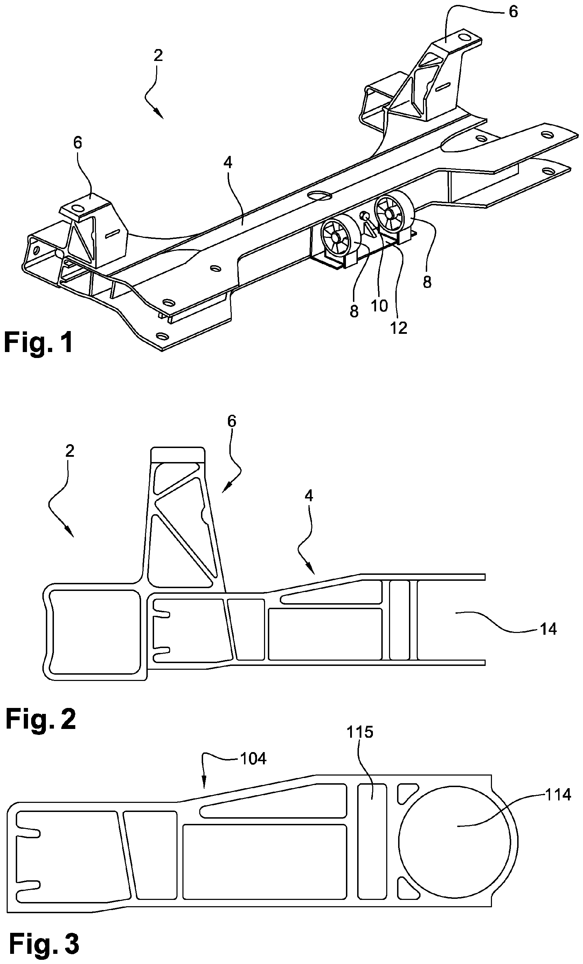

Les figures 1 et 2 illustrent un berceau conforme à l'état de la technique. La figure 1 est une vue en perspective du berceau et la figure 2 est une vue de profil du berceau de la figure 1. Le berceau 2 est constitué essentiellement d'un profilé 4 en aluminium réalisé par extrusion et de deux pièces de liaison 6 communément appelées cornes. Ces cornes 6 s'étendent essentiellement verticalement depuis chacune des extrémités du profilé 4 et permettent, notamment, la fixation du berceau à la structure du véhicule. Lesdites extrémités du profilé 4 comprennent des moyens de fixation du train roulant. La face arrière du profilé (selon la direction d'avancement en marche avant du véhicule) présente un support 12 de cales élastiques 8 destinées à assurer la fixation de la ligne d'échappement (non représentée). Un ou plusieurs axes liés à la ligne d'échappement peuvent coopérer par engagement avec les orifices aux centres des cales élastiques 8. Le support 12 est fixé au profilé au moyen de vis 10. Ces dernières requièrent de réaliser un filetage dans la paroi du profilé, ce qui est pénalisant en termes de coût. La présence du support 12 est également pénalisante d'un point de vue masse.

Le document de brevet publié US 2008/0053737 A1 a trait à la fixation souple d'une ligne d'échappement à la structure d'un véhicule. Plus particulièrement, cet enseignement propose un mode de fixation souple qui élimine l'utilisation de support(s) intermédiaire(s). Pour ce faire, la fixation comprend un fil métallique dont une extrémité est reliée de manière rigide à la ligne d'échappement et l'autre extrémité est insérée dans une cale élastique. La cale élastique comprend essentiellement un manchon extérieur, un coeur en matériau élastomère logé dans ledit manchon, et un manchon intérieur au centre du coeur élastomère. Le manchon extérieur est inséré en force dans une paroi latérale d'un longeron de la structure du véhicule. L'extrémité du fil métallique est insérée dans le manchon intérieur, le coeur élastique assurant la liaison souple entre la structure du véhicule et la ligne d'échappement. Cette liaison est intéressante dans la mesure où elle réduit le nombre de pièces. Par contre, le montage de la cale élastique sur le longeron requiert la préparation d'un orifice avec une surface de guidage dans la paroi du longeron. Une telle opération est contraignante et de plus n'est pas nécessairement compatible avec un profilé en aluminium extrudé.

L'invention est définie par les caractéristiques de la revendication une et a pour objectif de proposer une fixation entre une structure portante, telle qu'un berceau pour train roulant de véhicule, et un élément périphérique, qui soit simple à mettre en oeuvre et, plus particulièrement, qui soit compatible avec un berceau comprenant un profilé extrudé.

L'invention a pour objet une structure portante de véhicule automobile, telle qu'un berceau pour les liaisons au sol du véhicule, la structure comprenant un profilé extrudé; et remarquable en ce que la section extrudée du profilé comprend, sur un ou plusieurs tronçons dudit profilé, une chambre faisant saillie de ladite section au voisinage dudit ou desdits tronçons, et formant un logement pour un moyen de fixation.

La chambre fait partie intégrante du profilé extrudé, elle est ainsi réalisée par extrusion.

La chambre fait saillie grâce à l'enlèvement de matière formant ladite chambre, sur au moins un côté dudit ou desdits tronçons, préférentiellement de part et d'autre dudit ou desdits tronçons. La chambre forme un contour fermé.

Le profilé est préférentiellement en aluminium. Il présente préférentiellement une section généralement allongée, la chambre étant préférentiellement à une des extrémités de la section.

Une cale en matériau élastique et dont le contour correspond essentiellement au profil intérieur de la chambre peut être logée dans le ou au moins un des logements. Chacune de ces cales peut présenter un orifice, préférentiellement central, destiné à recevoir un axe de fixation à un ou plusieurs éléments périphériques.

Selon un mode avantageux de l'invention, la chambre s'étend sur deux tronçons disjoints du profilé de manière à former deux logements pour un ou plusieurs moyens de fixation.

Selon un mode avantageux de l'invention, le ou les tronçons présentent, chacun, une longueur inférieure à 50%, préférentiellement 30%, plus préférentiellement 20%, de la longueur du profilé.

Selon un mode avantageux de l'invention, la chambre est circulaire, généralement carrée ou généralement rectangulaire.

Selon un mode avantageux de l'invention, la chambre est une première chambre, la section du profilé comprenant une deuxième chambre, préférentiellement opposée à la première, sur un tronçon du profilé et faisant saillie de ladite section au voisinage dudit tronçon, ladite chambre formant également un logement pour un moyen de fixation.

Selon un mode avantageux de l'invention, la structure comprend au moins une pièce de liaison reliée au profilé et s'étendant transversalement au profilé, ladite pièce étant une pièce extrudée et dont la section comprend une chambre formant un logement pour un moyen de fixation. La direction d'extrusion des pièces de liaison, une fois fixées au profil, correspond essentiellement à celle du profilé.

L'invention a également pour objet un procédé de fabrication d'une structure portante selon l'invention, remarquable par les étapes suivantes :
(a) extrusion du profilé au moyen d'une filière avec préférentiellement une section telle que la chambre est à une extrémité de ladite section ;
(b) enlèvement, préférentiellement par usinage, de la matière du profilé formant ladite chambre, de manière à laisser le ou les tronçons formant le ou les logements. Selon un mode avantageux de l'invention, la section du profilé comprend une chambre auxiliaire ayant une cloison commune avec la chambre destinée à former le ou les logements, l'étape (b) comprenant l'enlèvement de ladite cloison.

L'invention a également pour objet un véhicule automobile comprenant une structure portante pour les liaisons au sol du véhicule, ladite structure étant préférentiellement disposée transversalement dans le compartiment moteur, remarquable en ce que la structure est conforme à l'invention, une cale élastique étant disposée dans le logement ou chacun des logements du profilé, la ou les cales comprenant un orifice central apte à recevoir un axe de fixation de la ligne d'échappement ou d'une biellette de liaison au moteur du véhicule.

Selon l'invention, la structure portante comprend à chacune des extrémités du profilé une pièce de liaison s'étendant essentiellement verticalement, lesdites pièces étant extrudées suivant la direction principale du profilé et comprenant, chacune, une chambre formant un logement supportant une barre anti-dévers du véhicule.

Les mesures de l'invention sont intéressantes en ce qu'elles permettent de réaliser de manière économique des logements aptes à coopérer avec des moyens de fixation. En effet, l'extrusion donne aux pièces ainsi produites des formes plus précises que celles qui sont réalisées par estampage ou matriçage. Elles présentent des états de surface excellents, ce qui permet en l'occurrence d'utiliser les logements ainsi produits sans usinage complémentaire. L'opération d'enlèvement de matière est souvent présente pour un berceau extrudé, si bien que l'enlèvement de matière spécifique pour la formation du ou des logements ne représente pas de surcoût significatif. De plus, les mesures de l'invention réduisent fortement le nombre de pièces nécessaires à la fixation d'un élément périphérique tel qu'une ligne d'échappement. Les opérations d'assemblage sont également fortement simplifiées puisqu'il n'y pas plus de vissage dans le profilé extrudé.

D'autres caractéristiques et avantages de la présente invention seront mieux compris à l'aide de la description et des dessins parmi lesquels :
- La figure 1 est une vue en perspective d'un berceau pour train roulant, selon l'art antérieur ;
- La figure 2 est une vue de profil du berceau de la figure 1 ;
- La figure 3 est une vue de profil du profilé d'un berceau selon un premier mode de réalisation de l'invention ;
- La figure 4 est une vue en perspective du berceau selon le premier mode de réalisation de l'invention ;
- La figure 5 est une vue de profil du profilé d'un berceau selon un deuxième mode de réalisation de l'invention ;
- La figure 6 est une vue de profil d'un corne du berceau selon le deuxième mode de réalisation de l'invention ;
- La figure 7 est une première vue en perspective du berceau selon le deuxième mode de réalisation de l'invention ;
- La figure 8 est une deuxième vue en perspective du berceau selon le deuxième mode de réalisation de l'invention.

Les figures 1 et 2 déjà ont été brièvement détaillées précédemment en relation avec la description de l'art antérieur. Il est intéressant d'observer à la figure 2 que la section du profilé 4 comprend une cavité ouverte 14 à son bord arrière. A la figure 1 on peut observer que les parois horizontales supérieure et inférieure de cette cavité servent, via les trous aux extrémités du profilé, de moyens de fixation au train roulant. On peut également observer que la matière de ces parois a été enlevée à la partie centrale du profilé 4 afin de faciliter l'accès à la paroi de fond de la cavité 14, destinée à servir de paroi de montage du support 12.

Le principe de l'invention est de réaliser le support des moyens de fixation directement dans la masse du profilé, lors de son extrusion et d'enlever ensuite la matière excédentaire.

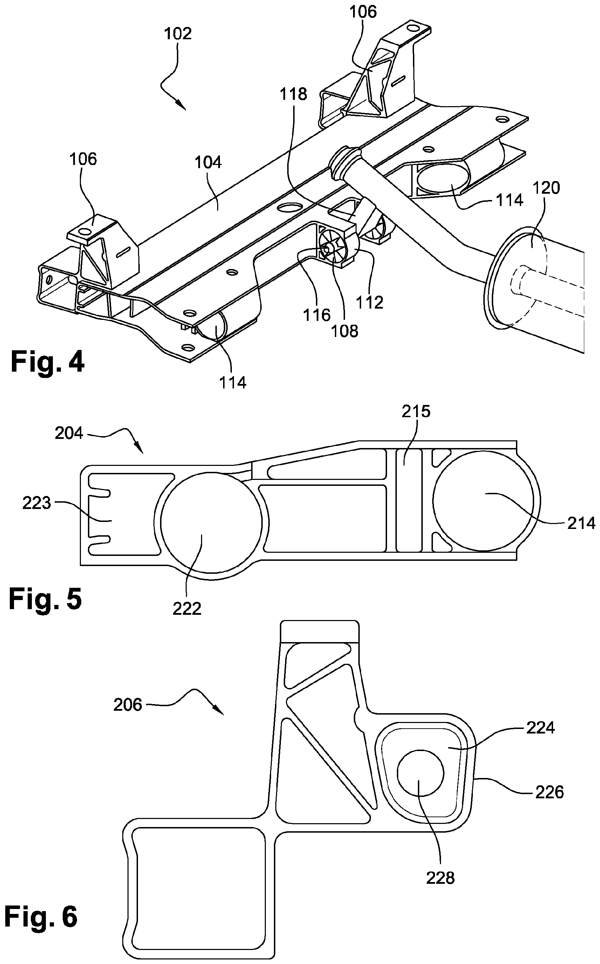

Les figures 3 et 4 illustrent un premier mode de réalisation de l'invention. A la figure 3 qui est une vue en coupe du profilé 104 du berceau, on peut observer que la section du profilé comprend à son bord arrière une chambre 114. Celle-ci présente un contour fermé qui, en l'occurrence, est de forme circulaire. La section du profilé peut également comprendre une chambre auxiliaire 115 partageant une paroi avec la chambre 114. Cette chambre auxiliaire 115 est préférentiellement d'une largeur dans la direction longitudinale du véhicule (c'est-à-dire horizontale sur la figure 3) qui est réduite par rapport à celle de la chambre 114. La section du profilé peut comprendre par ailleurs d'autres chambres comme cela est visible à la figure 3. Dans l'exemple de la figure 3, la section du profilé est généralement étirée dans la direction longitudinale du véhicule. Il est toutefois à noter qu'une telle configuration est exemplative et que d'autres configurations sont envisageables.

A la figure 4 on peut observer le berceau 102 selon le premier mode de réalisation de l'invention. Il comprend le profilé 104 extrudé avec la section illustrée à la figure 3 ainsi que deux cornes ou pièces de liaison 106 fixées aux extrémités du profilé 104. On peut observer que la chambre 114 est bien présente aux deux extrémités du profilé 104 et que de la matière correspondant à cette chambre a été enlevée afin de former les logements 112 faisant saillie du profilé. Ces logements correspondent à des tronçons de la chambre 114 et sont rendus accessibles par l'enlèvement de la matière formant ladite chambre de part et d'autre desdits tronçons. En l'occurrence, le profilé comprend deux logements 112 distants l'un de l'autre et situés essentiellement à une position centrale du profilé. Le nombre de logements et leur(s) position(s) est dépendante de l'enlèvement de matière. Il est en effet possible de ne former qu'un seul logement ou plus de deux logements, à diverses positions.

Une cale élastique 108 est logée dans chacun des deux logements 112 et la ligne d'échappement 120 comprend une patte de fixation 118 s'étendant vers une position entre les deux logements 112. Un fil ou axe 116 s'étend de part et d'autre de la patte de fixation, entre les deux logements 112, au travers de chacune des cales élastiques 116. Ces dernières peuvent être un disque en matériau élastomère dont l'épaisseur peut correspondre essentiellement à celle du logement. Le diamètre extérieur de la cale élastique 108 correspond essentiellement au diamètre intérieur du logement, avec éventuellement un serrage. La cale élastique peut être montée en force dans le logement et/ou y être collée ou vulcanisée. Elle comprend un orifice central destiné à recevoir l'axe ou fil 116 de la patte de fixation de l'élément périphérique, en l'occurrence de la ligne d'échappement. L'axe peut être une vis ou une broche montée par insertion au travers des cales élastiques respectives 108 et au travers d'une entretoise de la patte de fixation 118.

Il est intéressant de noter à la figure 4 que la matière formant la chambre 114 n'a été que partiellement enlevée aux extrémité du profilé, de manière à conserver les parois supérieure et inférieure, et ce à des fins de fixation du train roulant au travers des orifices dans ces parois. La matière de ces parois a toutefois été enlevée de part et d'autre des logements 112, de manière à davantage libérer leur accès. Il est également intéressant de noter que la matière correspondant à la paroi commune aux chambres 114 et 115 (figure 3) a été enlevée de part et d'autre des logements 112, également de manière à bien libérer leur accès. De telles mesures sont toutefois optionnelles.

Les figures 5 à 8 illustrent un deuxième mode de réalisation de l'invention. Les numéros de référence du première mode de réalisation sont utilisés pour les mêmes éléments ou les éléments correspondants de ce deuxième mode de réalisation, ces numéros étant toutefois majorés de 100 afin de bien distinguer les deux modes de réalisation. Des numéros spécifiques compris entre 200 et 300 sont utilisés pour référencer les éléments spécifiques à ce mode de réalisation.

Similairement à la figure 3 du premier mode de réalisation, la figure 5 est une vue en coupe transversale du profilé 204 d'un berceau selon un deuxième mode de réalisation. Il comprend, similairement au profilé du premier mode, une chambre 214 à sa face arrière et une chambre auxiliaire 215. Il comprend cependant une deuxième chambre circulaire 222 située à l'avant des chambres 214 et 215. Un chambre auxiliaire 223 est prévue à l'avant de ladite chambre. La deuxième chambre circulaire 222 est destinée, similairement à la première 214, à former, par enlèvement de matière de la deuxième chambre 222 et de la chambre auxiliaire 223 sur des portions définies de la longueur du profilé, un ou plusieurs logements aptes à servir de moyen de fixation pour un ou plusieurs éléments périphériques.

La figure 6 est une vue de profil d'une des cornes ou pièces de liaison 206 du berceau du deuxième mode de réalisation de l'invention. Les cornes sont des pièces extrudées avec une section comprenant, de manière optionnelle, une chambre 226 en saillie par rapport au contour général de la portion de la corne s'étendant généralement verticalement vers le haut. En l'occurrence, cette chambre fait saillie vers l'arrière, étant entendu qu'elle pourrait faire saillie vers l'avant. Une cale élastomère 224 est logée dans la chambre 226, la cale présentant un orifice 228 destiné à recevoir un barre anti-dévers du train roulant.

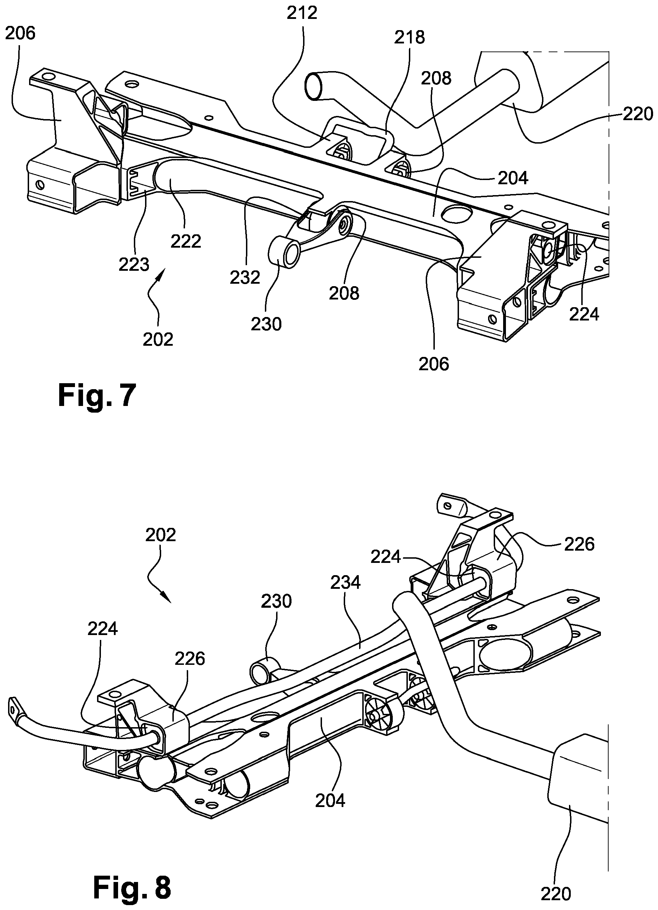

La figure 7 est une première vue en perspective du berceau 202 selon le deuxième mode de réalisation de l'invention. On peut observer que la face avant du profilé 204 comprend un logement 232 formé par la chambre 222 et par enlèvement de matière correspondant à cette chambre ainsi qu'à la chambre auxiliaire 223 de part et d'autre du tronçon du profilé correspondant au logement 232. En l'occurrence, cette matière n'a pas été enlevée aux extrémités du profilé, les faces avant et supérieure de la chambre auxiliaire 223 servant de surface d'appui et de fixation des cornes 206. Ces dernières peuvent y être fixées par soudage.

Une biellette 230 est fixée de manière rotative au logement 232, éventuellement via une cale en élastomère 208 similaire à celles décrites dans le cadre du premier mode de réalisation (référence 108 à la figure 4). La biellette peut être reliée au moteur dans le cadre d'un moteur monté transversalement, l'empêchant de pivoter selon un axe transversal.

Similairement au berceau du premier mode de réalisation de l'invention, le profilé 204 comprend deux logements 212 faisant saillie de sa face arrière. La ligne d'échappement y est fixée par des moyens de fixation alternatifs à ceux illustrés à la figure 4, à savoir au moyen d'un fil métallique 218 en forme de U dont la base est rigidement reliée à la ligne d'échappement. Les deux jambes du U comprennent, chacune, une extrémité en forme de L. Ces deux extrémités sont orientées dans le même sens et sont préférentiellement alignées, de manière à permettre leur insertion dans les cales élastiques 208 par un mouvement selon une direction parallèle à celle du profilé 204. Au moins une des extrémités du fil peut présenter des moyens d'arrêt, tel qu'un circlips logé sur une gorge, une goupille logée dans un orifice ou encore une forme conique avec un rebord d'arrêt.

La figure 8 est une vue en perspective du berceau de la figure 7, la vue étant ici depuis un point de vue arrière. De plus la barre anti-dévers 234 y est représentée. On peut observer qu'elle traverse les cales élastiques 224 logées dans les chambres correspondantes 226 des cornes 206. Il est à noter que la barre anti-dévers 234 peut être réalisée en plusieurs parties assemblées les unes aux autres après insertion dans les orifices des cales élastiques.

De manière générale, il est à noter que l'invention permet de réaliser un ou plusieurs logements pour des moyens de fixation, à divers endroits d'un profilé extrudé. Ce ou ces logements peuvent être sur une face avant, supérieure, arrière et/ou inférieure du profilé. La forme de la chambre dans la section du profilé qui va former la ou les logements peut être circulaire, carrée, rectangulaire ou encore de toute autre forme.

## Revendications

1. Véhicule automobile comprenant une structure portante (102 ; 202) pour les liaisons au sol du véhicule, ladite structure étant disposée transversalement dans le compartiment moteur, la structure comprenant un profilé extrudé (104; 204) ; et la section extrudée du profilé (104; 204) comprenant, sur un ou plusieurs tronçons dudit profilé, une chambre (114 ; 214, 222) faisant saillie de ladite section au voisinage dudit ou desdits tronçons, et formant un logement (112 ; 212, 232) pour un moyen de fixation (108 ; 208), une cale élastique (108 ; 208) étant disposée dans le logement ou chacun des logements (112, 212, 232) du profilé, la ou les cales comprenant un orifice central apte à recevoir un axe de fixation de la ligne d'échappement (120 ; 220) ou d'une biellette (230) de liaison au moteur du véhicule, ledit véhicule étant **caractérisé en ce que** la structure portante comprend à chacune des extrémités du profilé une pièce de liaison (206) s'étendant essentiellement verticalement, lesdites pièces étant extrudées suivant la direction principale du profilé et comprenant, chacune, une chambre (226) formant un logement supportant une barre anti-dévers (234) du véhicule.

2. Véhicule selon la revendication 1, **caractérisé en ce que** la chambre (114 ; 214) s'étend sur deux tronçons disjoints du profilé (104 ; 204) de manière à former deux logements (112 ; 212) pour des moyens de fixation (208).

3. Véhicule selon l'une des revendications 1 et 2, **caractérisé en ce que** le ou les tronçons présentent, chacun, une longueur inférieure à 50%, préférentiellement 30%, plus préférentiellement 20%, de la longueur du profilé.

4. Véhicule selon l'une des revendications 1 à 3, **caractérisé en ce que** la chambre (114; 214, 222) est circulaire, généralement carrée ou généralement rectangulaire.

5. Véhicule selon l'une des revendications 1 à 4, **caractérisé en ce que** la chambre est une première chambre (214), la section du profilé (204) comprenant une deuxième chambre (222), préférentiellement opposée à la première (214), sur un tronçon du profilé (204) et faisant saillie de ladite section au voisinage dudit tronçon, ladite chambre (222) formant également un logement (232) pour un moyen de fixation (208).

6. Véhicule selon l'une des revendications 1 à 5, **caractérisé en ce que** la structure portante (202) comprend au moins une pièce de liaison (206) reliée au profilé (204) et s'étendant transversalement au profilé, ladite pièce étant une pièce extrudée et dont la section comprend une chambre (226) formant un logement pour un moyen de fixation (224).

7. Procédé de fabrication d'une structure portante (102 ; 202) comprise dans un véhicule selon l'une des revendications 1 à 6, **caractérisé par** les étapes suivantes :
(a) extrusion du profilé (104, 204) au moyen d'une filière avec préférentiellement une section telle que la chambre (114 ; 214) est à une extrémité de ladite section ;
(b) enlèvement, préférentiellement par usinage, de la matière du profilé formant ladite chambre (114, 214, 222), de manière à laisser le ou les tronçons formant le ou les logements (112, 212, 232).

8. Procédé de fabrication selon la revendication 7, **caractérisé en ce que** la section du profilé (104 ; 204) comprend une chambre auxiliaire (115 ; 215) ayant une cloison commune avec la chambre (114, 214) destinée à former le ou les logements (112, 212), l'étape (b) comprenant l'enlèvement de ladite cloison.

## Patentansprüche

1. Kraftfahrzeug, das eine Tragstruktur (102; 202) für die Verbindungen mit dem Boden des Fahrzeugs umfasst, wobei die Struktur quer in dem Motorraum angeordnet ist, wobei die Struktur ein extrudiertes Profil (104; 204) umfasst und der extrudierte Querschnitt des Profils (104; 204) auf einem oder mehreren Abschnitten des Profils eine Kammer (114; 214, 222) umfasst, die von dem Querschnitt in der Nähe der Abschnitte vorsteht und eine Aufnahme (112; 212, 232) für ein Befestigungsmittel (108; 208) bildet, einen federnden Keil (108; 208), der in der Aufnahme oder jeder der Aufnahmen (112, 212, 232) des Profils angeordnet ist, wobei der oder die Keile eine zentrale Öffnung umfassen, die in der Lage ist, eine Befestigungsachse des Abgasstrangs (120; 220) oder einen Schwingarm (230) zum Verbinden mit dem Motor des Fahrzeugs aufzunehmen, Fahrzeug **dadurch gekennzeichnet, dass** die Tragstruktur an jedem der Enden des Profils ein Verbindungsteil (206) umfasst, das sich im Wesentlichen vertikal erstreckt, wobei die Teile entlang der Hauptrichtung des Profils extrudiert sind und jeweils eine Kammer (226) umfassen, die eine Aufnahme bildet, die eine Querstabilisatorstange (234) des Fahrzeugs trägt.

2. Fahrzeug nach Anspruch 1, **dadurch gekennzeichnet, dass** sich die Kammer (114; 214) auf zwei getrennten Abschnitten des Profils (104; 204) derart erstreckt, dass sie zwei Aufnahmen (112; 212) für Befestigungsmittel (208) bildet.

3. Fahrzeug nach einem der Ansprüche 1 und 2, **dadurch gekennzeichnet, dass** der oder die Abschnitte jeweils eine Länge kleiner als 50 %, bevorzugt 30 %, bevorzugter 20 % der Länge des Profils aufweisen.

4. Fahrzeug nach einem der Ansprüche 1 bis 3, **dadurch gekennzeichnet, dass** die Kammer (114; 214, 222) kreisförmig, im Allgemeinen quadratisch oder im Allgemeinen rechteckig ist.

5. Fahrzeug nach einem der Ansprüche 1 bis 4, **dadurch gekennzeichnet, dass** die Kammer eine erste Kammer (214) ist, wobei der Querschnitt des Profils (204) eine zweite Kammer (222), bevorzugt der ersten Kammer (214) entgegengesetzt, auf einem Abschnitt des Profils (204) umfasst und von dem Querschnitt in der Nähe des Abschnitts vorsteht, wobei die Kammer (222) auch eine Aufnahme (232) für ein Befestigungsmittel (208) bildet.

6. Fahrzeug nach einem der Ansprüche 1 bis 5, **dadurch gekennzeichnet, dass** die Tragstruktur (202) mindestens ein Verbindungsteil (206) umfasst, das mit dem Profil (204) verbunden ist und sich quer zu dem Profil erstreckt, wobei das Teil ein extrudiertes Teil ist, dessen Querschnitt eine Kammer (226) umfasst, die eine Aufnahme für ein Befestigungsmittel (224) bildet.

7. Verfahren zum Herstellen einer Tragstruktur (102; 202) die in einem Fahrzeug nach einem der Ansprüche 1 bis 6 umfasst ist, **gekennzeichnet durch** die folgenden Schritte:
(a) Extrusion des Profils (104, 204) mittels eines Spritzteils mit bevorzugt einem Querschnitt derart, dass die Kammer (114; 214) an einem Ende des Querschnitts ist,
(b) Abtragen, bevorzugt **durch** Bearbeitung, des Materials des Profils, das die Kammer (114, 214, 222) bildet, derart, dass der oder die Abschnitte, die die Aufnahme(n) (112, 212, 232) bilden belassen werden.

8. Herstellungsverfahren nach Anspruch 7, **dadurch gekennzeichnet, dass** der Querschnitt des Profils (104; 204) eine Hilfskammer (115; 215) umfasst, die eine gemeinsame Wand mit der Kammer (114, 214) hat, die dazu bestimmt ist, die Aufnahme oder die Aufnahmen (112, 212) zu bilden, wobei der Schritt (b) das Abtragen der Wand umfasst.

## Claims

1. A motor vehicle including a supporting structure (102; 202) for the suspension systems of the vehicle, said structure being disposed transversely in the engine compartment, the structure including an extruded profile (104; 204); and the extruded portion of the profile (104; 204) including, on one or more segments of said profile, a chamber (114; 214, 222) projecting from said portion in the vicinity of said segment(s), and forming a housing (112; 212, 232) for an attachment means (108; 208), an elastic shim (108; 208) being disposed in the housing or each of the housings (112, 212, 232) of the profile, the shim or shims including a central orifice able to receive an attachment axis of the exhaust line (120; 220) or of a linking rod (230) to the engine of the vehicle, said vehicle being **characterized in that** the supporting structure includes at each of the ends of the profile a linking piece (206) extending substantially vertically, said pieces being extruded along the main direction of the profile and each including a chamber (226) forming a housing supporting an anti-roll bar (234) of the vehicle.

2. The vehicle according to claim 1, **characterized in that** the chamber (114; 214) extends over two separate segments of the profile (104; 204) so as to form two housings (112; 212) for attachment means (208).

3. The vehicle according to one of claims 1 and 2, **characterized in that** the segment or segments each have a length smaller than 50 %, preferably 30 %, more preferably 20 %, of the length of the profile.

4. The vehicle according to one of claims 1 to 3, **characterized in that** the chamber (114; 214, 222) is circular, generally square or generally rectangular.

5. The vehicle according to one of claims 1 to 4, **characterized in that** the chamber is a first chamber (214), the portion of the profile (204) including a second chamber (222), preferably opposite the first (214), on a segment of the profile (204) and projecting from said portion in the vicinity of said segment, said chamber (222) also forming a housing (232) for an attachment means (208).

6. The vehicle according to one of claims 1 to 5, **characterized in that** the supporting structure (202) includes at least one linking piece (206) connected to the profile (204) and extending transversely to the profile, said piece being an extruded piece and the portion of which includes a chamber (226) forming a housing for an attachment means (224).

7. A method for the manufacture of a supporting structure (102; 202) comprised in a vehicle according to one of claims 1 to 6, **characterized by** the following steps:
(a) extrusion of the profile (104, 204) by means of a die with preferably a portion such that the chamber (114; 214) is at an end of said portion;
(b) removal, preferably by machining, of the material of the profile forming said chamber (114, 214, 222), so as to leave the segment or segments forming the housing or housings (112, 212, 232).

8. The method of manufacture according to claim 7, **characterized in that** the portion of the profile (104; 204) includes an auxiliary chamber (115; 215) having a partition shared with the chamber (114, 214) intended to form the housing or housings (112, 212), the step (b) including the removal of said partition.
